# EUROPEAN PATENT APPLICATION

(11) **EP 4 360 741 A1**
(43) Date of publication of application: **01.05.2024**
(21) Application number: 22203258.3
(22) Date of filing: 24.10.2022
(51) Int. Cl.: B01D 53/06, B01D 53/04

(54) **SYSTEM FOR DIRECT AIR CAPTURE OF CARBON DIOXIDE**

(71) Applicant: Siemens Energy Global GmbH & Co. KG, 81739 München (DE)
(72) Inventor: Hjalmarsson, Christer, 61291 Finspong (SE); Jaksch, Peter, 60211 Norrköping (SE); Svensson, Oscar, 582 55 Linköping (SE)

(57) **Abstract**

A CO₂ capture unit includes a frame arranged to define a first carriage structure and a second carriage structure around a central axis, a fixed structure surrounding and attached to the frame, a first adsorption cell and a second adsorption cell, each disposed in the first carriage structure and the second carriage structure, respectively, the first and second adsorption cells each including an inlet and an outlet, a rotatable ring coupled to the frame to position the first carriage structure in the desorption phase, a lower arm coupled to the fixed structure and positioned on the opposite side of the frame from the upper arm, and an upper lid coupled to the upper arm and a lower lid coupled to the lower arm, both arms movable between an open position and a closed position in which the upper lid and the lower lid seal the first adsorption cell for desorption.

## Description

### BACKGROUND

Direct air capture is a process of capturing carbon dioxide (CO₂) directly from an air stream. One method of direct air capture uses a sorbent to capture and remove the CO₂ from the air stream upon contact. The disadvantages of this method of direct air capture include the high cost of the equipment, the high heat demand for the desorption, and its high electricity demand.

### BRIEF SUMMARY

In one construction, a carbon dioxide capture system includes a frame arranged to define a first carriage structure and a second carriage structure around a central axis, a fixed structure surrounding and attached to the frame, a first adsorption cell disposed in the first carriage structure and a second adsorption cell disposed in the second carriage structure, the first adsorption cell and the second adsorption cell each including an inlet at a first open end and an outlet at a second open end, a ring coupled to the frame and rotatable around the central axis to position the first carriage structure in the desorption phase, a lower arm coupled to the fixed structure and positioned on the opposite side of the frame from the upper arm, and an upper lid coupled to the upper arm and movable between an open position and a closed position and a lower lid coupled to the lower arm and movable between an open position and a closed position in which the upper lid and the lower lid seal the first adsorption cell for desorption.

In another construction, a carbon dioxide capture system includes a frame including an upper plate and a lower plate, a fixed structure and attached to the frame, a first adsorption cell positioned within the frame between the upper plate and the lower plate, the first adsorption cell including an inlet at a first open end and an outlet at the second open end, a second adsorption cell positioned within the frame between the upper plate and the lower plate, the second adsorption cell including an inlet at a first open end and an outlet at the second open end, an upper linearly moving arm coupled to the frame and movable to a position above the first adsorption cell, a lower linearly moving arm coupled to the frame and movable to a position below the first adsorption cell, an upper lid coupled to the upper linearly moving arm and movable between an open position and a closed position, and a lower lid coupled to the lower linearly moving arm and movable between an open position and a closed position. In the closed position, the upper lid and the lower lid seal the first adsorption cell for a desorption mode.

In a further construction, a carbon dioxide capture system includes a first adsorption cell and a second adsorption cell adjacent to the first adsorption cell a frame arranged to carry the first adsorption cell and the second adsorption cell, an upper lid coupled to the frame and movable between an open position and a closed position, and a lower lid coupled to the frame and movable between an open position and a closed position. The upper lid and the lower lid move within the frame between the first adsorption cell and the second adsorption cell so that one of the first adsorption cell and the second adsorption cell is in a desorption phase and the other one is in an adsorption phase.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an external perspective view of an embodiment of a direct air capture system.
FIG. 2 illustrates an internal perspective view of the direct air capture system of FIG. 1.
FIG. 3 illustrates a perspective view of a carriage structure of FIG. 2.
FIG. 4 illustrates a side view of the carriage structure of FIG. 3.
FIG. 5 illustrates an external perspective view of a further embodiment of a direct air capture system.
FIG. 6 illustrates an internal perspective view of the direct air capture system of FIG. 5.
FIG. 7 illustrates a zoomed in view of the upper linearly moving arm and the lower linearly moving arm.
FIG. 8 illustrates a perspective view of an adsorption cell.
FIG. 9 illustrates a perspective view of an individual sorbent element.
FIG. 10 illustrates a sectional view of the sorbent element of FIG. 9.
FIG. 11 illustrates a perspective view and a cross sectional view of a movable lid.
FIG. 12 illustrates a perspective view of a further direct air capture system.

### DETAILED DESCRIPTION

One process for carbon dioxide capturing from ambient air includes having a solid sorbent to which the carbon dioxide molecules can adsorb through reactions with amine groups. Other sorbents may also be used in the process including, but not limited to, structures with micropores acting as molecular sieves. During adsorption, air needs to be moved around the sorbent to provide carbon dioxide in air to the sorbent so that it can be adsorbed. During desorption, the sorbent with the adsorbed carbon dioxide can be captured. To desorb, the temperature is raised and the partial pressure of the CO₂ is lowered. The latter can be done by purging with another medium and/or lowering the absolute pressure in the sorbent container. In the foregoing process, steam is used for both purging and heating of the sorbent. At the start of the desorption phase, the air pressure in the sorbent container may be lowered using a vacuum pump, thereby lowering the amount of air that is mixed with the CO₂ to be delivered by the unit.

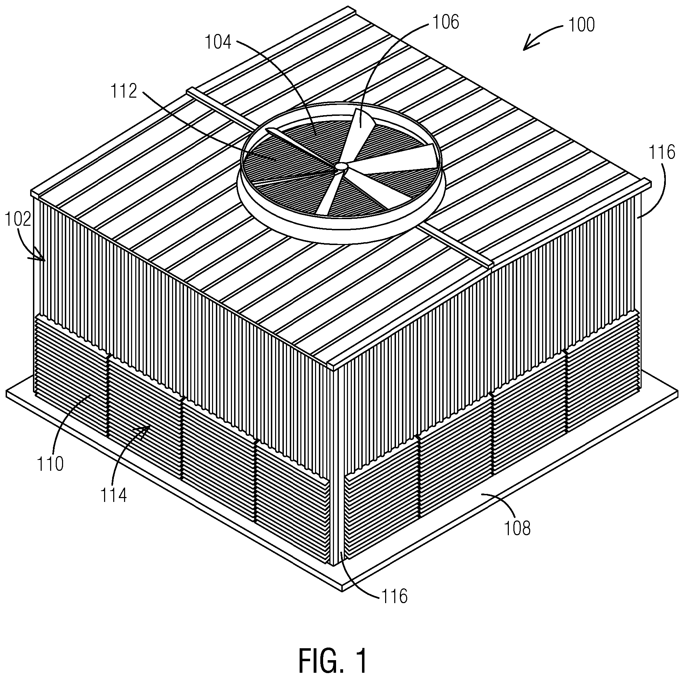

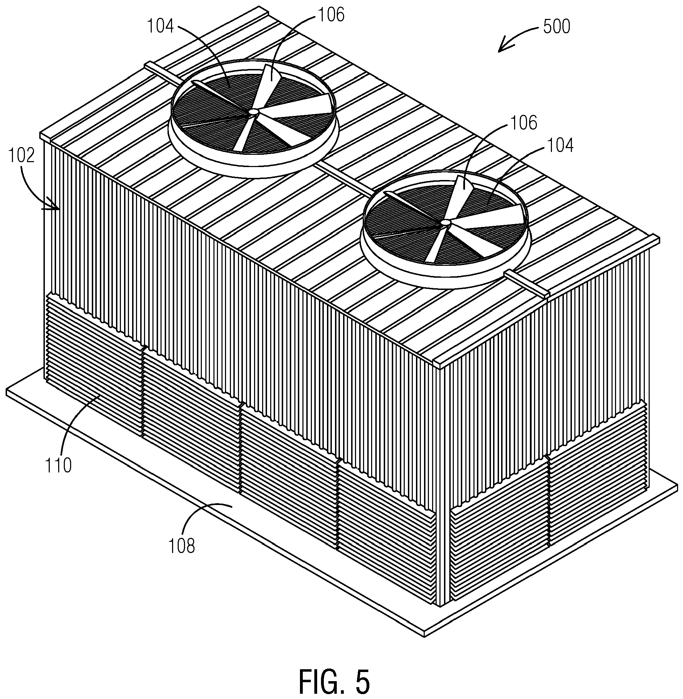

FIG. 1 illustrates a perspective view of a direct air capture system 100 as viewed externally. The direct air capture system 100 is housed by a fixed structural shell 102. In the shown embodiment, the fixed structural shell 102 is rectangular in shape. The fixed structural shell 102 includes a first opening 104 and a second opening 114 to allow a through flow of air. A fan 106 is positioned in the first opening 104. The fan 106 is utilized to draw in a flow of air, shown by arrows, through the fixed structural shell 102. More than one fan 106 may be used in this structural design to vertically direct the air flow through the fixed structural shell 102, however, one larger fan 106, for example having a diameter of 8 to 10 m, or two smaller fans 106, for example having a diameter of 5 to 6 m, should suffice to adequately move the air flow through the fixed structural shell 102 for the purposes of the direct air capture system 100. FIG. 5 illustrates a further embodiment of a direct air capture system 500 utilizing two fans 106.

All of the internal components of the direct air capture system 100 are carried by the fixed structural shell 102 mounted on legs 116 so that the fixed structural shell 102 is above a ground surface 108. In an embodiment, the fixed structural shell 102 is several meters above the ground surface 108 to minimize inflow and air recirculation. Between adjacent legs 116 and between the fixed structural shell 102 and the ground surface 108 is a louvered siding 110 attached to the fixed structural shell 102 to allow the flow of air into the fixed structural shell 102 at the second opening 114 while protecting the direct air capture system 100 from unauthorized entrance of people and animals, for example. Access to technical personnel may be allowed by removing a section of the louvered siding 110 or by installing a door within the louvered siding 110, for example. An air filter may also be disposed adjacent to the louvered siding 110 if desired. Just inside the first opening 104, a rain defense louver unit 112 may be positioned within the fixed structural shell 102 adjacent to the fan 106 to inhibit water from entering the fixed structural shell 102.

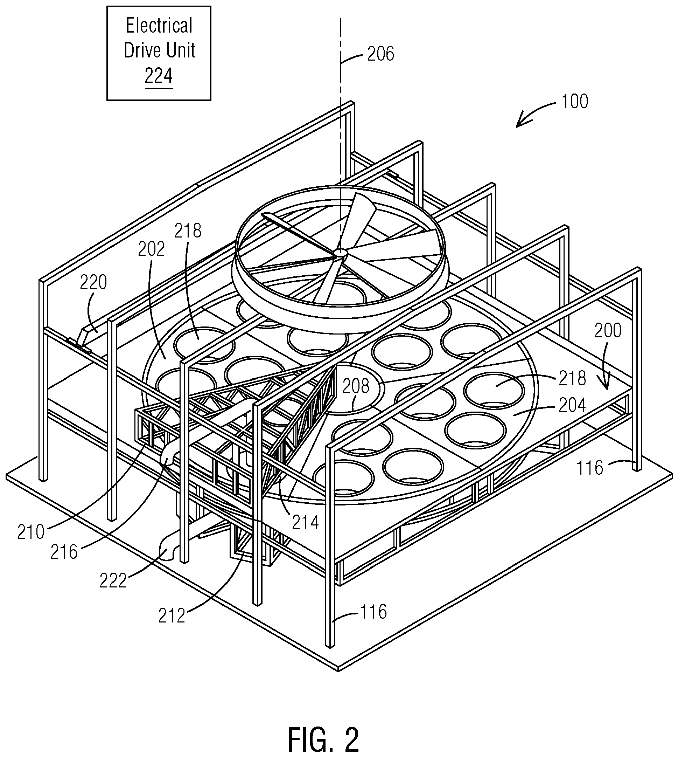

FIG. 2 illustrates an internal perspective view of the direct air capture system 100 of FIG. 1. The internal perspective view illustrates components of the direct air capture system 100 disposed within the fixed structural shell 102. The direct air capture system 100 includes a frame 200, the frame 200 including an upper plate including outlet apertures and a lower plate including a corresponding number of inlet apertures. The frame 200 defines at least a first carriage structure 202 and a second carriage structure 204 arranged around a central axis 206. In the shown embodiment, six carriage structures are arranged in a circular layout, creating a rotating disc structure. Adsorption cells 218 are positioned between the upper plate and the lower plate and are aligned with one of the inlet apertures and a corresponding one of the outlet apertures so that any flow through the direct air capture system 100 passes through one of the adsorption cells 218. Several fasteners interconnect the upper plate and the lower plate to complete the assembly of the frame 200. In the center of the frame 200 lies a rotatable ring 208 which supports and aligns the frame 200 to allow for rotation of the disc structure. The rotation of disc structure is driven either by drive wheels positioned on the outer diameter of the disc structure controlled by an electrical drive unit 224 or a combination of a slew and drive bearing.

In the shown embodiment, each first carriage structure 202 and second carriage structure 204 includes three adsorption cells 218 positioned within the frame 200. The frame 200 seals the air passage so that the flow of air only flows through the adsorption cells 218. In the shown embodiment, there are six carriage structures positioned within the frame 200, each carriage structure including three adsorption cells 218. Of course, other constructions could include fewer than three adsorption cells 218 or more than three adsorption cells 218 as may be required. In an embodiment, the first carriage structure 202 and the second carriage structure 204 include a different number of adsorption cells 218. Each adsorption cell 218 includes a structural shell or container, including an inlet at a first open end and an outlet at a second open end to allow air to flow through the adsorption cell 218 during an adsorption phase of the direct air capture.

An upper arm 210 is coupled to the fixed structural shell 102 extending from the fixed structural shell 102 toward the central axis 206. A corresponding lower arm 212 is positioned on the opposite side of the rotating disc structure from the upper arm 210 and is coupled to the fixed structural shell 102 also extending from the fixed structural shell 102 toward the central axis 206.

Each of the upper arm 210 and the lower arm 212 includes at least one lid 214 so that an upper lid is coupled to the upper arm 210 and a lower lid (not shown) is coupled to the lower arm 212. Both the upper lid and the lower lid are movable between an open position and a closed position. The open position may be defined as one in which the adsorption cell 218 is open to a through flow of air, i.e., the lids 214 do not close off the adsorption cell 218. The closed position may be defined as one in which the adsorption cell 218 is closed off to a flow of air, i.e., the lids 214 are positioned to cover and seal the first open end and the second open end of the adsorption cell 218.

By rotation of the rotating disc structure, each carriage structure is positioned so that the upper lid and the lower lid are concentric with the first open end and the second open end of an adsorption cell 218. Once the rotating disc structure is positioned so that the upper lid is positioned to be concentric with the second open end of the adsorption cell 218 and the lower lid is positioned to be concentric with the first open end of the adsorption cell 218, each lid 214 then moves toward and mates with a flat surface at the respective first open end or second open end of the adsorption cell 218 so that the respective first open end and/or second open end is covered and sealed. The lid 214 movement may be actuated by an electric motor or a pneumatic piston, for example. There are a corresponding number of upper and lower lids for each adsorption cell 218 in the first carriage structure 202 or the second carriage structure 204.

A first steam piping 216 is attached from an external source to a port opening of each upper lid. Steam is fed into each adsorption cell 218 through the first steam piping 216. Likewise, a second steam piping 222 is attached from the port opening of a lower lid out to a position external to the fixed structural shell 102. Through the lower lid, carbon dioxide and steam will be extracted.

A service arm 220 is coupled to the fixed structural shell 102. The service arm 220 is equipped with a lifting device that allows for easy removal of the container of the adsorption cell 218. The container may be lowered down to a service area in order to exchange it for another adsorption cell 218.

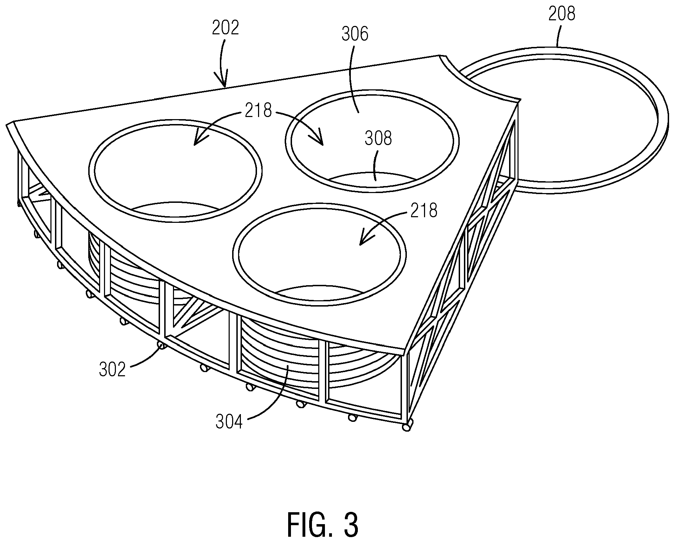

FIG. 3 illustrates a zoomed in view of the first carriage structure 202. Of course, the second carriage structure 204 would have a similar if not identical structure. The first carriage structure 202 includes three adsorption cells 218. The container 304 of the adsorption cell 218 may be seen in FIG. 3. The adsorption cell 218 includes a first open end 308 and a second open end 306. In an embodiment, the first carriage structure 202 includes drive wheels 302 positioned on an outer circumference of the rotating disc structure that roll in a track on the lower plate of the frame 200 to enable movement of the first carriage structure 202 to rotate about the central axis 206 within the frame 200. The ring 208 is positioned on an inner diameter of the first carriage structure 202 to enable movement of the first carriage structure 202 about the central axis 206.

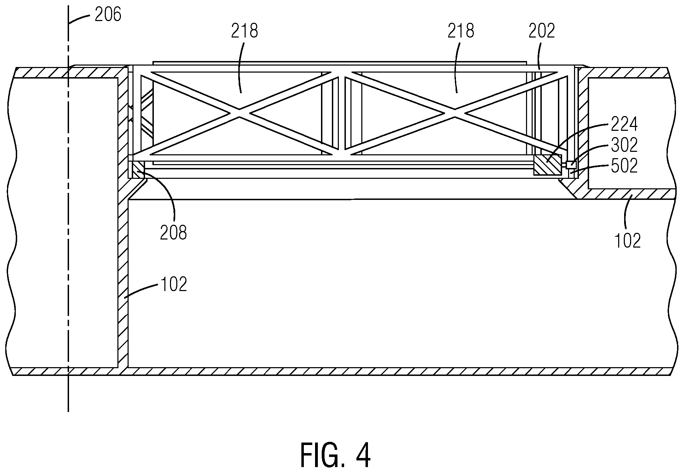

FIG. 4 shows a side view of the first carriage structure 202 of FIG. 3. The first carriage structure 202 is attached to the fixed structural shell 102 in the center via the ring 208. Movement of the rotating disc structure is driven by rotation of the ring 208 which is controlled by the electrical drive unit 224 and by drive wheels 302 positioned in a track 402.

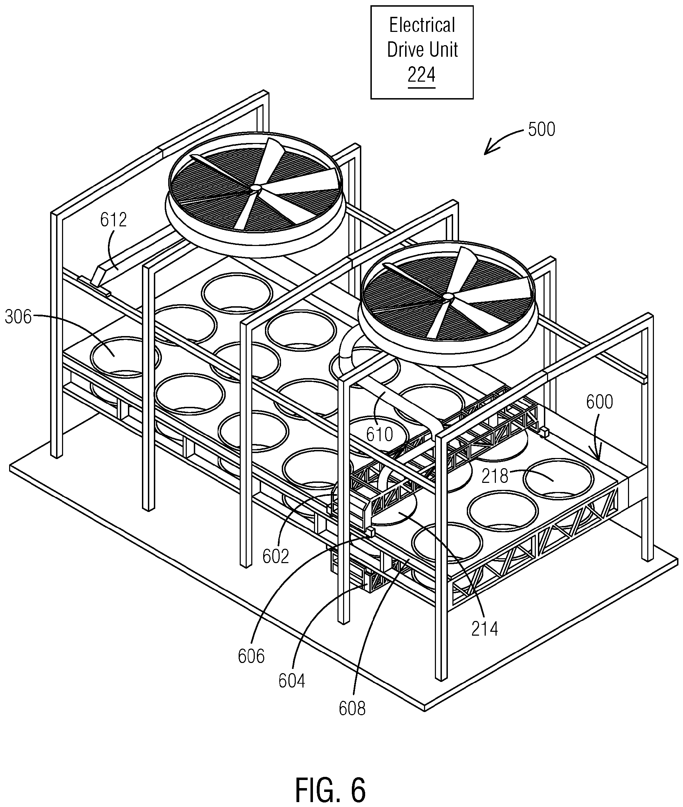

FIG. 6 illustrates an internal perspective of a further embodiment of the direct air capture system 500. The internal perspective view illustrates components of the direct air capture system 500 disposed within the fixed structural shell 102. The direct air capture system 500 includes a frame 600 including an upper plate including outlet apertures and a lower plate including a corresponding number of inlet apertures. Adsorption cells 218 are positioned between the upper plate and the lower plate and are aligned with one of the inlet apertures and outlet apertures so that any flow through the direct air capture system 500 pass through one of the adsorption cells 218. Several fasteners interconnect the upper plate and the lower plate to complete the assembly of the frame 600.

In contrast to the embodiment of FIG. 2, the adsorption cells 218 of the embodiment of FIG. 6, are arranged in rows in a rectangular frame 600. In the shown embodiment, the adsorption cells 218 are arranged in six rows, each row including three adsorption cells 218. Of course, other constructions could include a different number of rows having a different number of adsorption cells 218 in each row. Similarly, to the embodiment shown in FIG. 2, each adsorption cell 218 includes a structural shell, or container, including an inlet at a first open end (not shown) and an outlet at a second open end 306 to allow air to flow through the adsorption cell 218 during an adsorption phase of the direct air capture.

A linearly moving upper arm 602 and a linearly moving lower arm 604 are coupled to the frame. The upper arm 602 and the lower arm 604 extend across one row of adsorption cells 218. Movement is enabled by drive wheels 606 that roll in a track 608 on the frame 600. The upper arm 602 and the lower arm 604 are positioned on the opposite side of the frame 600 from one another and move in unison across the rows of adsorption cells 218. An electrical drive unit 614 controls movement of the linearly moving upper arm 602 and the linearly moving lower arm 604.

To close off the adsorption cells 218 from the atmosphere during desorption, there are lids 214. Each of the lower arm 604 and the upper arm 602 include at least one lid 214. Upper lids are attached to the upper arm 602 and the lower lids are attached to the lower arm 212. In the shown embodiment, only the upper lids are shown. As the lids 214 are mounted on the upper arm 602 and the lower arm 604, each lid 214 may be used for more than one adsorption cell 218. The ratio of the number of lids 214 and the number of adsorption cells 218 can be chose so that it gives an optimal ratio of sorption time to desorption time. The lids 214 are movable between an open position and a closed position as described previously. To get the lid 214 to the closed position, the lid 214 is positioned to be concentric with the first open end or the second open end of the adsorption cell 218 by movement of the upper arm 602 or the lower arm 604 respectively. The lids 214 then move toward and mate with a flat surface at the respective first open end or second open end of the adsorption cell 218 so that the respective first open end or second open end is covered and sealed.

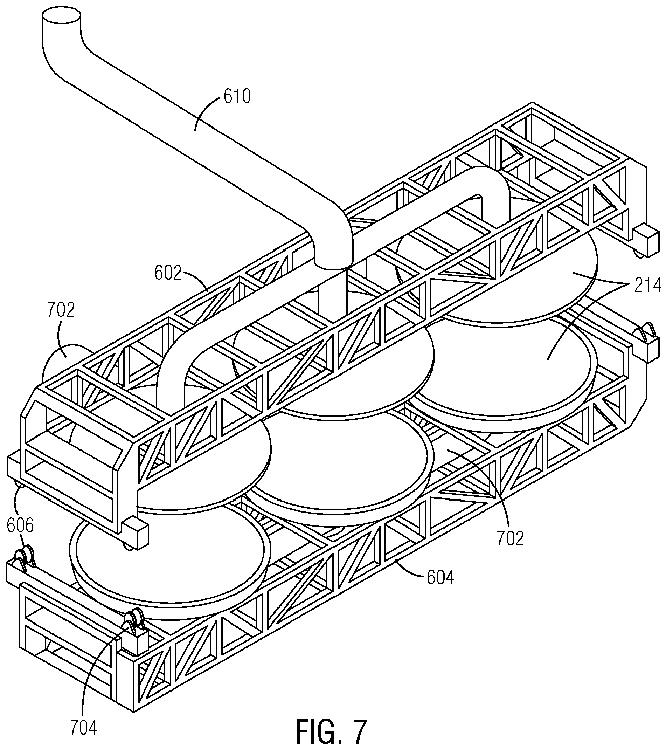

A first steam piping 610 is attached from an external source to the upper lid so that steam may be fed into the first steam piping 610 and distributed into each upper lid. The first steam piping 610 is designed so that it moves with the linearly moving upper arm 602. In an embodiment, the first steam piping 610 uses swiveling joints to enable it to move with the linearly moving upper arm 602. In an alternate embodiment, the first steam piping 610 uses flexible hoses or tubes to provide this functionality. A second steam piping 702 (see FIG. 7) is attached from the lid 214 on the lower arm 604 to a position external to the fixed structural shell 102. With this arrangement, the same first steam piping 610 and the second steam piping 702 may be used during desorption of the different sorbent units. Through the lids 214 on the lower arm 604, steam and CO₂ will be extracted. The second steam piping 702 is designed similarly to the first steam piping 610.

A service arm 612 attached to the fixed structural shell 102 may be equipped with a lifting device that allows for easy removal of the container of the adsorption cell 218. The container may be lowered down to a service area in order to exchange it for another adsorption cell 218. Additional connections to the moving structure, i.e., electrical, control, compressed air, water, drainage, etc.) are run on one side of the moving structure using cable tracks.

FIG. 7 illustrates a zoomed in view of the linearly moving upper arm 602 and the linearly moving lower arm 604. Each of the upper arm 602 and the lower arm 604 includes a lid arrangement including one or more lids 214. Each lid 214 includes a port opening so that the first steam piping 610 or the second steam piping 702 has fluid communication with its respective adsorption cell 218. Each of the linearly moving upper arm 602 and the linearly moving lower arm 604 includes drive wheels 606 that roll on the track 608. The lower arm 604 is coupled to a track 608 in the lower plate so that the drive wheels 606 roll on the track.

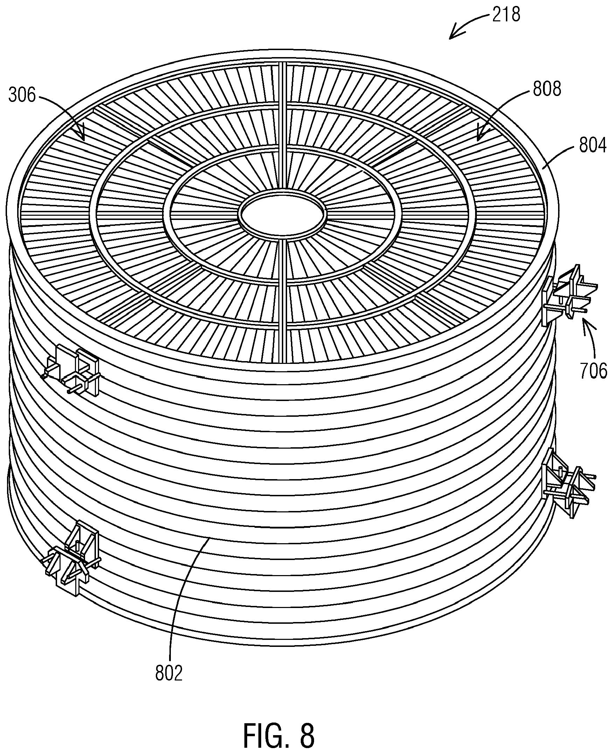

FIG. 8 illustrates a perspective view of an adsorption cell 218. The adsorption cell 218 includes a structural shell 802 with a first open end (not shown) and a second open end 306 opposite the first open end to allow for a through flow of air. The fixed structural shell 802 may comprise a corrugated steel container. At each of the first open end and the second open end a surface 804 allows for mating with a corresponding lid 214. FIG. 8 only illustrates the second open end 306, however, the first open end also includes the surface 804 for mating with a corresponding lid 214. The surface 804 is wide enough to handle misalignments between the adsorption cell 218 and the lid 214. Adjustable mounting mountable hardware 806 is used to attach the adsorption cell 218 to the frame 200, frame 600. The adsorption cell 218 also includes a sorbent element 808 installed within the structural shell 802. In the shown embodiment, the adsorption cell 218 includes twenty sorbent elements 808, however, the adsorption cell 218 may include a range of 1-40 sorbent elements 808.

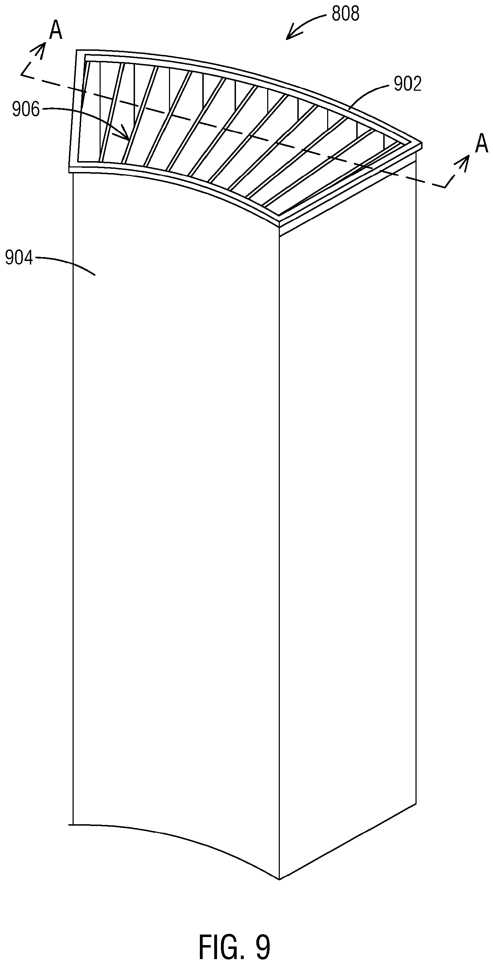

FIG. 9 illustrates a perspective view of an individual sorbent element 808. Each sorbent element 808 includes a solid frame 902 that may be installed to hang inside the adsorption cell 218 from inside the structural shell 802. The solid frame 902 includes solid side portions 904 so that a flow of air is forced through a sorbent material 906 positioned within a cavity defined by the solid frame 902.

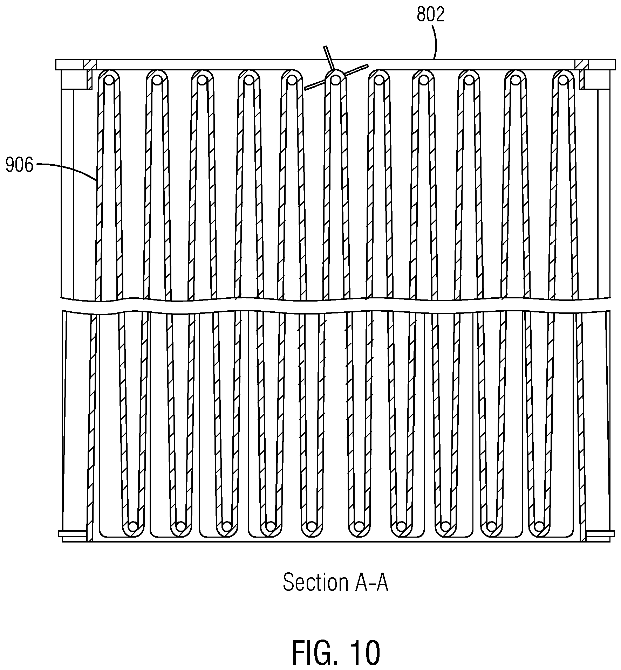

FIG. 10 illustrates the sorbent material 906 within the sorbent element 808 according to the section defined by A-A of FIG. 9. The sectional view shows the sorbent material 906 extending lengthwise folded in a wave pattern within the solid frame 902. The wave pattern allows for an increased amount of sorbent material 906 within the solid frame 902 while keeping the thickness of the sorbent material 906 thin, such as between 2-10 mm thick, and the pressure drop minimal. For example, by using a large surface area as compared to a small thick ness of the sorbent material, the volume of air flowing through the wave pattern of sorbent material 906 is kept constant while the flow speed and the resistance from the sorbent material 906 is lowered.

The sorbent material 906 may be filled with a solid amine sorbent which is commonly used for removing CO₂ from gas streams. The amine may be doped with polymer granules.

The dimensions of the solid frame 902 as well as the number of folds of the sorbent material 906 may be varied based on the sorbent element 808 placement within the adsorption cell 218 in order to maximize the surface area and volume of the sorbent material 906.

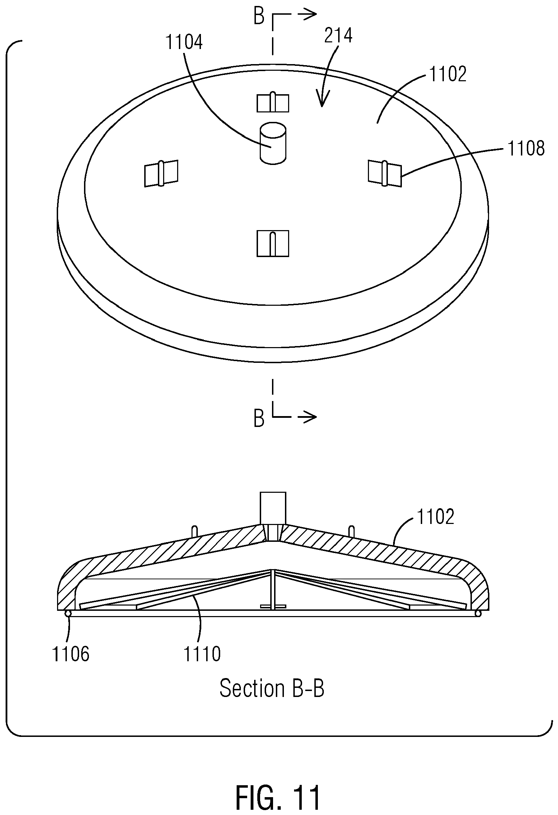

FIG. 11 illustrates a perspective view of a lid 214. The lid 214 includes a sectional view of the lid 214 defined by section B-B of FIG. 8. The lid 214 includes a shell 1102, a port opening 1104, and a seal element 1106. The seal element 1106 cooperates with the surface 804 of the adsorption cell 218 to define a seal. The seal allows for an airtight connection with the adsorption cell 218 when aligned. The lid 214 is attached to the respective arm by adjustable mounting hardware 1108 allowing for positional control. The lid 214 also includes a one-way valve 1110 as shown in Section B-B. For the upper lids, the valve 1110 allows steam to flow into each adsorption cell 218 but inhibits air to enter the first steam piping 216. For the lower lids, the valve 1110 helps to minimize the volume that needs to be evacuated from the adsorption cell 218. In an embodiment, the valve 1110 may be an elastomeric lip valve or a duckbill valve or any other type of valve that performs the desired function.

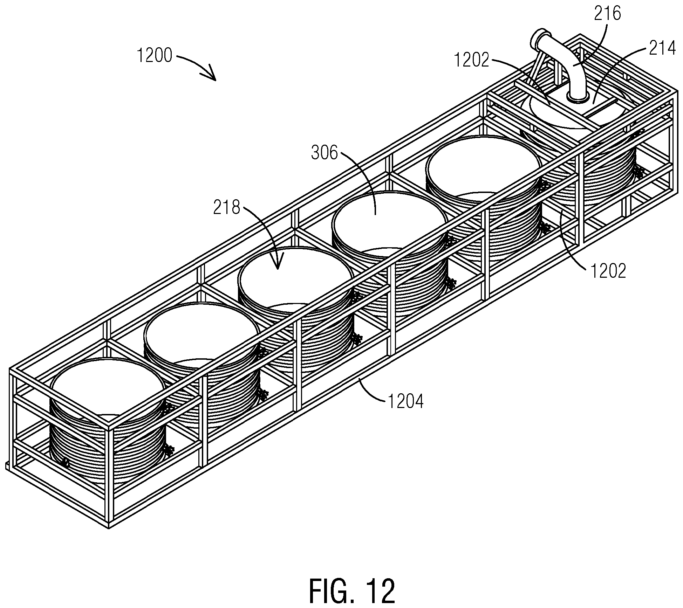

FIG. 12 illustrates another embodiment of the direct air capture system 1200. The direct air capture system 1200 includes a frame 1204 which may be a standard shipping container or ISO container. The frame 1204 may be divided up into sections, each section holding an adsorption cell 218. In the shown embodiment, the frame 1204 is divided into six sections, each section holding one adsorption cell 218.

Similarly, to the other described embodiments, each adsorption cell 218 includes a structural shell, or container, including an inlet at the first open end (not shown) and an outlet at the second open end 306 to allow air to flow through the adsorption cell 218 during an adsorption phase of the direct air capture.

A lid 214 is shown disposed in a carriage coupled to the frame. The lid 214 covers the second open end 306 of the adsorption cell 218 shown as the upper end of the adsorption cell 218 in FIG. 12. Another lid 214 (not shown) covers and seals the first open end 308 (not shown) of the adsorption cell 218 so that the adsorption cell 218 is in a desorption phase. Each lid 214 may be used for more than one adsorption cell 218. The lid 214 can move within a carriage 1202 in the frame 1204 between the adsorption cells 218. The ratio of the number of lids 214 and the number of adsorption cells 218 can be chose so that it gives an optimal ratio of sorption time to desorption time.

A first steam piping 216 carries steam to the adsorption cell 218 via the upper lid from an external source. A second steam piping 222 (not shown) carries away extracted steam and carbon dioxide via the lower lid from the adsorption cell 218 after the desorption. Thus, in the shown embodiment, one adsorption cell 218 is in the desorption phase while five adsorption cells 218 are in the adsorption phase.

In operation, a flow of air is drawn into the fixed structural shell 102, through the louvered siding 110, and then through a selected portion of adsorption cells 218, located internally within the fixed structural shell 102, and out through the first opening 104. The fan 106 operates to draw in the flow of air horizontally through the louvered siding 110 and then vertically through the fixed structural shell 102. One larger fan or two smaller fans 106 (FIG. 5) should be sufficient to operate the direct air capture system 100, 500. In the embodiments shown in FIGs. 1 and 4, a flow of air is vertically directed out of the first opening 104 away from the ground surface 108.

During operation, most of the adsorption cells 218 operate in an adsorption phase, while a portion of the adsorption cells 218 simultaneously operate in a desorption phase. In the embodiment shown in FIG. 2, the adsorption cells 218 are grouped into six carriage structures, each carriage structure having three adsorption cells 218. The adsorption cells 218 of one of the carriage structures operate in the desorption phase while the remaining carriage structures operate in the adsorption phase. During the operation of the embodiment illustrated in FIG. 6, one row of adsorption cells 218 operate in the desorption phase while the remaining rows of adsorption cells 218 operate in the adsorption phase.

For those adsorption cells 218 in the adsorption phase, the lids 214, i.e. both the upper lids and the lower lids are in an open position so that the air flows through each adsorption cell 218. During a time period in which the lids 214 are in the open position, carbon dioxide in the air flow may be adsorbed into the sorbent material 906 within each adsorption cell 218. In an embodiment, the air is drawn through the sorbent material 906 of each adsorption cell 218 for approximately 1 hour and 40 minutes.

After a time period in the adsorption phase, a desorption phase initiated. In the embodiment shown in FIG. 2, the rotating disc structure rotates so that the adsorption cells 218 of the carriage structure align with the respective upper lid of the upper arm and the lower lid of the lower arm and then translate to a closed position. In the closed position, the upper lid and the lower lid close a corresponding second open end 306 and first open end 308 of the corresponding adsorption cell 218 to seal the structural shell 802. In the further embodiment shown in FIG.5, the lids 214 of the linearly moving upper arm 602 and the linearly moving lower arm 604 are positioned to be concentric with the first open end or the second open end of each adsorption cell 218 by a linear movement of the upper arm 602 or the lower arm 604 respectively. The lids 214 then translate to a closed position. In the closed position, the upper lid and the lower lid close a corresponding second open end 306 and first open end 308 of the corresponding adsorption cell 218 to seal the structural shell 802.

During the desorption phase, the temperature within each closed adsorption cell 218 is raised to a range of 60-110 degrees Celsius and the partial pressure of the carbon dioxide within the cavity of the closed adsorption cell 218 is reduced. In order to reduce the partial pressure of the carbon dioxide in the closed adsorption cell 218, the adsorption cell 218 can be purged with another medium and/or the absolute pressure in the cavity of the closed adsorption cell 218 can be lowered thereby reducing the amount of air that is mixed with the carbon dioxide to be delivered by the adsorption cell 218. Reducing the amount of air in the structural shell 802 may be accomplished using a vacuum pump by opening a valve in the second steam piping 222, second steam piping 702 that is connected to the vacuum pump. When the desired pressure level is reached, the valve to the vacuum pump is closed. In an embodiment, the absolute pressure within the cavity of the closed adsorption cell 218 is lowered to 0.02-0.04 bar. The chosen pressure level sets the steam condensation temperature and is chosen based on the temperature of the available heat for steam generation. In addition to allowing the carbon dioxide to be captured within the sorbent container 304, the vacuum also protects the sorbent material from degradation that would occur due to exposure to air.

With the lids 214 in the closed position, steam is fed, into the structural shell 802 via the first steam piping 216 through the upper lid from an external source. In an embodiment, the steam has a temperature of between 60and 110 degrees Celsius. Through the lower lid, carbon dioxide and steam are extracted, via a second steam piping 702 from the structural shell 802. After feeding steam into the upper lid for a desired time, the steam flow from the external source is switched off. The pressure in the adsorption cell 218 is lowered to a pressure between 0.03-0.08 such that a drying phase is initiated. This drying/cooling phase allows adsorbed water to evaporate and the adsorption cell 218 to cool down.

With regards to the direct air capture system's 100 operational description described above, two carriage structures were referenced, a first carriage structure 202 and a second carriage structure 204. However, multiple carriage structures may be utilized for the direct air capture system 100. For example, referring to FIG. 2, the rotating disc structure may be used so that six carriage structures are utilized each having at least one adsorption cell 218. Likewise, in the embodiment shown in FIG. 6, six rows of adsorption cells 218 in a frame 600 were shown and described. However, a different number of rows of adsorption cells 218 may exist in the frame 600 so that one row is in desorption phase and at least one row is in the adsorption phase. Each row has at least one adsorption cell 218. Utilizing the upper arm and lower arm structures with lids 214 allows one lid 214 to be used for more than one adsorption cell 218. The ratio of the number of lids 214 and the number of adsorption cells 218 may be chosen so that an optimal ratio of adsorption time to desorption time is achieved.

The proposed direct air capture system utilizes the components of the system as much as possible. For example, each lid may be used for more than one adsorption cell minimizing the number of lids needed for the system. Additionally, heat loss and the amount if piping required is also reduced from other direct air capture systems by utilizing the steam feed through the rotating structure and the lid arrangements.

## Claims

1. A carbon dioxide capture system, comprising:
a frame arranged to define a first carriage structure and a second carriage structure around a central axis;
a fixed structure surrounding and attached to the frame;
a first adsorption cell disposed in the first carriage structure and a second adsorption cell disposed in the second carriage structure, the first adsorption cell and the second adsorption cell each including an inlet at a first open end and an outlet at a second open end;
a ring coupled to the frame and rotatable around the central axis to position the first carriage structure in the desorption phase;
an upper arm coupled to the fixed structure;
a lower arm coupled to the fixed structure and positioned on the opposite side of the frame from the upper arm;
an upper lid coupled to the upper arm and movable between an open position and a closed position and a lower lid coupled to the lower arm and movable between an open position and a closed position in which the upper lid and the lower lid seal the first adsorption cell for desorption.

2. The carbon dioxide capture system of claim 1, wherein the frame includes an upper plate and a lower plate, the upper plate including outlet apertures and the lower plate including a corresponding number of inlet apertures, and wherein the first adsorption cell and the second adsorption cell are disposed between the upper plate and lower plate and align with a corresponding inlet aperture and outlet aperture.

3. The carbon dioxide capture system of claim 2, wherein the first carriage structure and the second carriage structure each include drive wheels on an outer circumference of the lower plate to enable movement of the first carriage structure and the second carriage structure about the central axis, and wherein the lower plate includes a track in which the drive wheels roll.

4. The carbon dioxide capture system of claim 3, wherein an electrical drive unit controls the rotation of the ring about the central axis.

5. The carbon dioxide capture system of claim 1, the ring is a slew and drive bearing to enable movement of the first carriage structure and the second carriage structure about the central axis.

6. The carbon dioxide capture system of claim 1, further comprising a fan positioned in an opening in the fixed structure operable to draw air vertically into the inlet of the second adsorption cell, through a sorbent material positioned within the second adsorption cell, and out of the outlet of the second adsorption cell during an adsorption phase of the direct air capture process.

7. The carbon dioxide capture system of claim 1, further comprising a first steam piping connected to the upper lid for providing steam via the upper lid to the first adsorption cell.

8. The carbon dioxide capture system of claim 1, further comprising a second steam piping connected to the lower lid for extracting steam and carbon dioxide via the lower lid from the first adsorption cell.

9. A carbon dioxide capture system, comprising:
a frame including an upper plate and a lower plate;
a fixed structure surrounding and attached to the frame;
a first adsorption cell positioned within the frame between the upper plate and the lower plate, the first adsorption cell including an inlet at a first open end and an outlet at the second open end;
a second adsorption cell positioned within the frame between the upper plate and the lower plate, the second adsorption cell adjacent to the first adsorption cell and including an inlet at a first open end and an outlet at a second open end;
an upper linearly moving arm coupled to the frame and movable to a position above the first adsorption cell;
a lower linearly moving arm coupled to the frame and movable to a position below the first adsorption cell;
an upper lid coupled to the upper linearly moving arm and movable between an open position and a closed position; and
a lower lid coupled to the lower linearly moving arm and movable between an open position and a closed position,
wherein in the closed position, the upper lid and the lower lid seal the first adsorption cell for desorption.

10. The carbon dioxide capture system of claim 9, wherein an electrical drive unit controls movement of the upper linearly moving arm and the lower linearly moving arm.

11. The carbon dioxide capture system of claim 1, wherein the upper linearly moving arm moves in unison with the lower linearly moving arm.

12. The carbon dioxide capture system of claim 9, wherein the upper linearly moving arm includes drive wheels positioned on each end of the moving arm and roll within a track in the frame to enable movement of the upper linearly moving and, wherein the lower linearly moving arm includes drive wheels positioned on each end of the lower linearly moving arm and roll within a track in the frame to enable movement of the lower linearly moving.

13. The carbon dioxide capture system of claim 9, further comprising a fan positioned in an opening in the fixed structure operable to vertically draw air into the inlet of the second adsorption cell, through a sorbent material positioned within the second adsorption cell and out of the outlet of the second adsorption cell during an adsorption phase of the direct air capture process.

14. The carbon dioxide capture system of claim 9, further comprising a first steam piping connected to the upper lid for providing steam via the upper lid to the first adsorption cell and a second steam piping connected to the lower lid for extracting steam and carbon dioxide via the lower lid from the first adsorption cell.

15. The carbon dioxide capture system of claim 14, wherein the first steam piping and the second steam piping both include a flexible tube or a swiveling joint to allow the first steam piping to move with the upper arm and the second steam piping to move with the lower arm, respectively.

16. A carbon dioxide capture system, comprising:
a first adsorption cell and a second adsorption cell adjacent to the first adsorption cell;
a frame arranged to carry the first adsorption cell and the second adsorption cell;
an upper lid coupled to the frame and movable between an open position and a closed position; and
a lower lid coupled to the frame and movable between an open position and a closed position,
wherein the upper lid and the lower lid move within the frame between the first adsorption cell and the second adsorption cell so that one of the first adsorption cell and the second adsorption cell is in a desorption phase and the other one is in an adsorption phase.

17. The carbon dioxide capture system of claim 16, further comprising a fan operable to vertically draw air into the inlet of one of the first adsorption cell or the second adsorption cell and through a sorbent material positioned within each of the first adsorption cell and the second adsorption cell and out of the outlet of the one of the first adsorption cell or the second adsorption cell during an adsorption phase of the direct air capture process.

18. The carbon dioxide capture system of claim 16, further comprising a first steam piping connected to the upper lid for providing steam via the upper lid to the one of the first adsorption cell or the second adsorption cell in the desorption phase.

19. The carbon dioxide capture system of claim 16, further comprising a second steam piping connected to the lower lid for extracting steam and carbon dioxide via the lower lid from the one of the first adsorption cell or the second adsorption cell in the desorption phase.

20. A carbon dioxide capture system, comprising:
a fixed frame defining a desorption position;
a first adsorption cell;
a second adsorption cell;
a movable member coupled to the first adsorption cell and the second adsorption cell and movable to a selectively position the first adsorption cell in the desorption position; and
a closure member coupled to the fixed frame and movable between an open position and a closed position in which the closure member seals the first adsorption cell for desorption.

21. A carbon dioxide capture system, comprising:
a fixed frame defining a desorption position;
a first adsorption cell;
a second adsorption cell;
a movable member coupled to the fixed frame and movable to a position so that the first adsorption cell is in the desorption position; and
a closure member coupled to the movable member and movable between an open position and a closed position in which the closure member seals the first adsorption cell.
